# EUROPEAN PATENT APPLICATION

(11) **EP 4 071 093 A1**
(43) Date of publication of application: **12.10.2022**
(21) Application number: 21167256.3
(22) Date of filing: 07.04.2021
(51) Int. Cl.: B65G 47/52, B65G 65/00, B65G 13/071

(54) **DOCK STATION ARRANGEMENT AND METHOD FOR TRANSFERRING GOODS BETWEEN A CONVEYOR DEVICE AND A TRANSPORT VEHICLE**

(71) Applicant: Interroll Holding AG, 6592 Sant' Antonino (CH)
(72) Inventor: The designation of the inventor has not yet been filed
(74) Representative: Eisenführ Speiser

(57) **Abstract**

Dock station arrangement (1) for transferring goods, in particular a goods carrier (2), between a conveyor device (70) and a transport vehicle (3), comprising a support conveyor module (10) having a first and second support conveyor unit (10a,b) defining a conveying plane (P), and the first and/or second support conveyor unit (10a,b) having at least one drivable support conveyor (11) and/or at least one passive support conveyor (13) for conveying the goods on the conveying plane (P) along a conveying direction (A), and the first and/or second support conveyor unit (10a,b) being adapted for switching back and forth between an idling state and a conveying state, wherein the respective at least one drivable support conveyor (11) is adapted to be driven in the conveying state for transferring the goods between the conveyor device (70) and the transport vehicle (3) and not to bed driven in the idling state, wherein the first and second support conveyor unit (10a,b) are arranged spaced apart from each other orthogonal to the conveying direction (A) defining a transport vehicle receiving space (S) with a gap (B).

## Description

The invention relates to a dock station arrangement for transferring goods between a conveyor device and a transport vehicle. Further, the invention relates to a conveyor system. Lastly, the invention relates to a method for transferring goods from a transport vehicle to a conveyor device by means of a dock station arrangement.

Usually, the conveyor device is a roller conveyor. However, also a ball conveyor, a belt conveyor, a pneumatic conveyor, an electromagnetic conveyor or alike are known types of a conveyor device.

A usual setup of a roller conveyor comprises a plurality of rollers being rotatably mounted in a frame. The axes of rotation of the rollers may be parallel to each other to setup a roller conveyor for a straight conveying direction. For a setup having a curved conveying direction, the axes of rotation of the rollers may be angular to each other and the rollers employed in such a curved path may have a conical shape.

A main advantage of such roller conveyors is the option to control the conveying action of a plurality of goods on said roller conveyor individually for each goods to be conveyed and selectively for single rollers or groups of rollers. Usually, a roller conveyor is divided up into a plurality of conveyor zones and each conveyor zone may be driven individually to effect a conveying of goods placed in said zone and to convey said goods into an adjacent downstream zone. For example, a roller conveyor may be controlled to convey a plurality of goods in a block mode, wherein all goods in all conveyor zones are conveyed simultaneously or in a single mode wherein a single good or goods in a single conveyor zone is/are conveyed from one zone to the adjacent downstream zone only if the adjacent downstream zone is empty.

Usually, a conveyor device and dock station arrangement is adapted to convey single bulk goods or unit goods or a single good. Further, the conveyor device and dock station arrangement may also be suitable to convey one or more goods in a goods carrier. The goods carrier may be a palette, a box, a container, a cardboard or a like. In particular, the goods carrier may be a standard European pallet as specified by the European Pallet Association. When reference is made herein to transferring goods between a conveyor device and a transport vehicle this applies mutatis mutandis to a single good or a goods carrier.

Usually, a transport vehicle introduces goods to be conveyed to the conveyor system. The transport vehicle is a vehicle to transport one or more goods. Further, the respective transport vehicle may be adapted to transport the one or more goods by means of a goods carrier. There are different types of transport vehicles for intralogistics. For example, a typical transport vehicle may be a forklifter, a cross stacker, a tug, a pallet truck, a lift truck or the like. Further, companies increase the degree of automation of their intralogistics processes. More and more companies use transport vehicles such as automated guided vehicles (AGVs) or autonomous mobile robots (AMRs) for their intralogistics.

Each of the different transport vehicles has different advantages and disadvantages. While the application of for example a forklifter is very flexible, an AMR or AGV is usually more applicable for standardized transport tasks. Further, some transport vehicles are more suitable to transport goods carriers, wherein other transport vehicles may be more suitable to transport goods without a goods carrier. Thus, in the field, companies usually use various types of transport vehicles.

By means of an interface, goods are transferred between a transport vehicle and a conveyor device. Such an interface is referred to as dock station arrangement within the present invention. Different dock station arrangements exist for the respective transport vehicle to transfer goods between a conveyor device and a transport vehicle.

Usually, a dock station arrangement is only suitable for one type of transport vehicle. This reduces compatibility between the dock station arrangement and different transport vehicles and, thus, flexibility. In order to keep up the flexibility, companies tend to buy and operate several dock station arrangements that each are compatible to a different transport vehicle. This increases costs, not only for buying several dock station arrangements but also for operation and maintenance. Further, operating several different dock station arrangements requires more space, which in turn again would increase costs. Lastly, the complexity of the conveyor device increases as it needs to be adapted to connect to several dock station arrangements.

In particular, it is known that the interfaces to load goods onto or from an AGV or AMR are not compatible with a conveyor device, in particular a roller conveyor, or transport vehicles other than AGVs or AMRs such as a forklifter.

Hence, it is an object of the invention, to provide a dock station arrangement compatible to different types of transport vehicles that enables an easy transfer of goods between a conveyor device and respective transport vehicles.

According to a first aspect of the invention, the object is achieved by a dock station arrangement according to claim 1.

The dock station arrangement is adapted for transferring goods, in particular a goods carrier, between a conveyor device and a transport vehicle. The dock station arrangement comprises a support conveyor module having a first and second support conveyor unit defining a conveying plane. The first and/or second support conveyor unit have at least one drivable support conveyor and/or at least one passive support conveyor for conveying the goods on the conveying plane along a conveying direction. Further, the first and/or second support conveyor unit are being adapted for switching back and forth between an idling state and a conveying state, wherein the respective at least one drivable support conveyor is adapted to be driven in the conveying state for transferring the goods between the conveyor device and the transport vehicle and not to bed driven in the idling state. The dock station arrangement is characterized in that the first and second support conveyor unit are arranged spaced apart from each other orthogonal to the conveying direction defining a transport vehicle receiving space with a gap.

The dock station arrangement is adapted for transferring the goods between the conveyor device and the transport vehicle. Transferring the goods between the conveyor device and the transport vehicle comprises transferring the goods from the transport vehicle to the conveyor device via the dock station arrangement or vice versa. Thus, the conveying direction may be bidirectional. A bidirectional conveying direction is to be understood in the sense of "left and right" or "forward and backward". When transferring from the transport vehicle to the conveyor device via the dock station arrangement the conveyor device is arranged downstream and the transport vehicle upstream with respect to the conveying direction. When transferring from the conveyor device to the transport vehicle via the dock station arrangement the conveyor device is arranged upstream and the transport vehicle downstream with respect to the conveying direction.

The dock station arrangement, the support conveyor module, the first and second support conveyor unit and the transport vehicle receiving space each extend with a length, a width and a height.

Any specification made herein regarding length, width and height are made in reference to the conveying direction and/or the conveying plane if not stated otherwise. The specification regarding the length is an extension along the conveying direction. The specification regarding the width is an extension orthogonal to the conveying direction in the conveying plane. The specification regarding height is an extension orthogonal to the conveying plane.

Preferably, the height of the dock station arrangement extends between a top side and a bottom side. Preferably, the conveying plane defines the top side of the dock station arrangement. Further, preferably, a side that is positioned on a ground in an installation or operation position is defined as the bottom side.

Any description made herein is made in reference to the installation position or operation position. In the installation or operation position, the dock station arrangement is operated for transferring the goods, in particular the goods carrier, between the conveyor device and the transport vehicle. In the installation or operation position the dock station arrangement is positioned on the ground.

Preferably, the dock station arrangement has a length larger than its width.

In particular, the support conveyor module has a module length of at least 600 mm, 700 mm, 800 mm, 900 mm, 1000 mm, 1100 mm, 1200 mm, 1300 mm, 1400 mm or 1500 mm. Further preferably, the support conveyor module has a module width of at least 600 mm, 700 mm, 800 mm, 900 mm, 1000 mm, 1100 mm, 1200 mm, 1300 mm, 1400 mm or 1500 mm. It may also be preferred that the module length and/or module width are at least 2000 mm. Lastly preferably, the support conveyor module has a module height of at least 100 mm, 200 mm, 300 mm, 400 mm, 500 mm, 600 mm, 700 mm or 800 mm. In particular, support conveyor module has a length of at least 1200 mm and a width of at least 800 mm or vice versa. It is further preferred that support conveyor module has a length of at least 1200 mm and a width of at least 1000 mm or vice versa.

Preferably, the preferred lengths and heights of the support conveyor module apply accordingly to the length and height of the first and second conveyor unit. However, preferably, the width of the respective support conveyor units is smaller than the width of the support conveyor module. In particular, the width of the respective support conveyor unit is at least 50 mm, 60 mm, 70 mm, 80 mm, 90 mm, 100 mm, 110 mm, 120 mm, 130 mm, 140 mm, 150 mm. Preferably, the respective support conveyor unit has a width of at least 10%, 20%, 30% or 40% of the width of the support conveyor module and at most a width of 20%, 30%, 40% or 50% of the width of the support conveyor module.

The first and second conveyor unit are arranged spaced apart from each other with the gap defining the transport vehicle receiving space.

The gap is the distance between the first and second support conveyor unit orthogonal to the conveying direction. Preferably, the gap between the first and second conveyer unit is at least 100 mm, 200 mm, 300 mm, 400 mm, 500 mm, 600 mm, 700 mm, 800 mm, 900 mm, 1000 mm. In particular, the gap is large enough to fit the transport vehicle between the respective support conveyor units. In particular, the first and second support conveyor units are arranged in such a manner to each other that the support conveyer module extends orthogonal to the conveying direction from the first support conveyor unit to the second support conveyor unit. In such an arrangement, the width of the support conveyor module is defined by the width of the first and second support conveyor unit and the gap.

Preferably, the preferred lengths and heights of the support conveyor module apply accordingly to length and width of the transport vehicle receiving space. Further, preferably, the preferred width of the support conveyor module applies accordingly to the width of the transport vehicle receiving space. In particular, the preferred specifications regarding the gap apply accordingly to the width of the transport vehicle receiving space. It may also be preferred that the width of the transport vehicle receiving space is larger than the the gap. Preferably, the width of the transport vehicle receiving space is smaller than the width of the support conveyor module. Further, preferably, the length of the transport vehicle receiving space is smaller than the length of the support conveyor module. Lastly, preferably, the height of the transport vehicle receiving space is smaller than the height of the support conveyor module. It may further be preferred that height of the transport vehicle receiving space extends from the conveying plane down to the ground plane the dock station arrangement is placed on in the installation or operation position.

In particular, the transport vehicle receiving space is large enough to receive the transport vehicle. In particular, the transport vehicle receiving space is large enough to receive the transport vehicle with the goods to be transferred between the conveyor device and the transport vehicle.

Preferably, the transport vehicle receiving space extends with a height from the bottom side of the dock station arrangement towards the conveying plane. In particular, the height of the transport receiving space is at least 10%, 20%, 30%, 40%, 50%, 60%, 70%, 80% or 90% of the height of the support conveyor module and at most 20%, 30%, 40%, 50%, 60%, 70%, 80%, 90% or 100% of the height of the support conveyor module.

It is preferred that the first and second support conveyor unit are arranged parallel to each other. In particular, the first and the second support conveyor unit have the same length and/or width and/or height. It may be preferred that the first and the second support conveyor unit are identical.

The first and second support conveyor unit are adapted to support goods to be transferred orthogonal to the conveying plane and to transfer the goods along the conveying direction. Thereto, preferably, an upside of the respective support conveyor units define the conveying plane. It is preferred that the at least one drivable support conveyor and the at least one passive support conveyor of the respective support conveyor unit define the conveying plane. In particular, a topside of the respective support conveyor unit defines the conveying plane.

Preferably, the respective support conveyor units of the support conveyor module each have at least one drivable support conveyor and at least one passive support conveyor. It may further be preferred that the first support conveyor unit has at least one drivable support conveyor but none passive support conveyor and the second conveyor unit has none drivable support conveyor but at least one passive support conveyor. Preferably, the first and/or second support conveyor unit comprises at least 2, 5, 10, 15 or 20 drivable support conveyors and/or at least 2, 5, 10, 15 or 20 passive support conveyors.

Preferably, the at least one drivable support conveyor is a conveyor that is adapted to be driven by some kind of a drive unit. Further, the at least one drivable support conveyor is preferably a conveyorthat is adapted to be driven by means of some kind of a transmission. The at least one passive support conveyor is not a drivable support conveyor. In particular, the passive support conveyor is not adapted to be driven by means of a drive unit or some kind of transmission. In particular, the at least one passive support conveyor is usually solely driven by means of the goods to be transferred between the conveyor device and the transport vehicle. Preferably, the passive support conveyor is adapted to support the goods to be transferred in a direction vertical to the conveying plane and to transfer the goods in the conveying direction. The at least one drivable support conveyor and/or the at least one passive support conveyor is rotably mounted.

Preferably, the at least one driveable support conveyor and/or the at least one passive support conveyor are a roller conveyor. The roller conveyor preferably has a diameter of at least 10 mm, 20 mm, 30 mm, 40 mm or 50 mm. It may further be preferred that the first and/or second support conveyor unit comprise or are some kind of a ball conveyor, a belt conveyor, a chain conveyor, a pneumatic conveyor, an electromagnetic conveyor or alike.

The first and/or second support conveyor unit are adapted for switching back and forth between an idling state and a conveying state. In the idling state, the first and/or second support conveyor unit do not transfer goods between the conveyor device and the transport vehicle. In the idling state, the respective support conveyor unit solely supports the goods to be transferred between the conveyor device and the transport vehicle or waits for goods to be transferred. In the conveying state, the first and/or second support conveyor unit may be driven for transferring the goods between the conveyor device and the transport vehicle. In particular, in the conveying state, the respective support conveyor unit is adapted to transfer the goods from the conveyor device to the transport vehicle or vice versa.

The ability to transfer goods with one or both support conveyor units, in particular with one or more drivable support conveyors, has the advantage that a driving power to transfer goods between the conveyor device and the transport vehicle can be adapted according to the power needed. In particular, the driving power provided to transfer the goods can be adapted depending on the weight of goods to be transferred. This may minimize the driving power to the level needed, which in turn minimizes costs.

Further, another advantage of the invention is that - in comparison to dock station arrangements known from the prior art - the arrangement of the first and second support conveyor unit spaced apart from each other orthogonal to the conveying direction defines a transport vehicle receiving space capable of receiving the transport vehicle. Therefore, the dock station arrangement is compatible with a larger amount of different transport vehicles in comparison to dock station arrangements known from the prior art.

A further advantage of the invention lies in the respective support conveyor units that are adapted for switching back and forth between an idling state and a conveying state. This allows to only use the dock station arrangement, meaning to power the dock station arrangement, when needed. In turn, power consumption and thus costs are reduced.

Further, the spaced apart arrangement of the first and second support conveyor unit enables to adapt the width of the dock station arrangement according to the width of the conveyor device it is supposed to transfer goods to or from the transport vehicle, which increases flexibility

According to a first preferred embodiment, the dock station arrangement comprises a transfer conveyor unit. The transfer conveyor unit defines the conveying plane. The transfer conveyor unit comprises at least one drivable transfer conveyor and/or at least one passive transfer conveyor for conveying the goods on the conveying plane along the conveying direction. The transfer conveyor unit is arranged along the conveying direction adjacent to the first and second support conveyor unit for transferring the goods between the conveyor device and the transport vehicle. Further, the transfer conveyor unit is adapted for switching back and forth between the idling state and the conveying state, wherein the respective at least one drivable transfer conveyor is adapted to be driven in the conveying state for transferring the goods between the conveyor device and the transport vehicle and not to be driven in the idling state.

The transfer conveyor has a length, a width and a height. Preferably, the preferred lengths, widths and/or heights of the support conveyor module apply accordingly to the length, width and/or height of the transfer conveyor unit. In particular, the transfer conveyor unit and the support conveyor module have the same width and/or height and/or length.

The transfer conveyor unit is adapted to support the goods to be transferred orthogonal to the conveying direction and to transfer the goods in the conveying direction. Thereto, the transfer conveyor unit defines a conveying plane that is preferably the same conveying plane defined by the respective support conveyor unit. It is preferred that the at least one drivable transfer conveyor and/or the at least one passive transfer conveyor define the conveying plane. In particular, a topside of the transfer conveyor unit defines the conveying plane.

Preferably, the respective transfer conveyor unit has at least one drivable transfer conveyor and at least one passive transfer conveyor. It may further be preferred that the transfer conveyor unit has at least one drivable transfer conveyor but none passive transfer conveyor or vice versa. Further, preferably, the transfer conveyor unit comprises at least 2, 5, 10, 15 or 20 drivable transfer conveyors and/or at least 2, 5, 10, 15 or 20 passive transfer conveyors.

The at least one drivable transfer conveyor is a conveyor that is adapted to be driven by some kind of a drive unit. In particular, the at least one drivable transfer conveyor and the at least one drivable support conveyor are adapted to be driven by the same drive unit. Further, the at least one drivable transfer conveyor is preferably a conveyor that is adapted to be driven by means of some kind of a transmission unit. In particular, the at least one drivable transfer conveyor and the at least one drivable support conveyor are adapted to be driven by the same transmission unit. The at least one passive transfer conveyor is not a drivable transfer conveyor. In particular, the passive transfer conveyor is not adapted to be driven by means of a drive unit or some kind of transmission unit. In particular, the at least one passive transfer conveyor is usually solely driven by means of the goods to be transferred between the conveyor device and the transport vehicle. Preferably, the passive transfer conveyor is adapted to support the goods to be transferred in a direction vertical to the conveying plane and to transfer the goods in the conveying direction. The at least one drivable transfer conveyor and/or the at least one passive transfer conveyor is rotably mounted.

The at least one driveable transfer conveyor and/or the at least one passive transfer conveyor are a roller conveyor. In particular, at least one of the at least one drivable support conveyer is a motorized conveyor roller and at least one of the least one driveable support conveyor is driven by means of the transmission unit that is connected to the motorized conveyor roller. In particular, at least one of the at least one drivable transfer conveyer is a motorized conveyor roller and at least one of the at least one driveable transfer conveyor is driven by means of the transmission unit that is connected to the motorized conveyor roller. It may further be preferred that the respective transfer conveyor unit comprises or is some kind of a ball conveyor, a belt conveyor, a chain conveyor, a pneumatic conveyor, an electromagnetic conveyor or alike.

The transfer conveyor unit is adapted for switching back and forth between an idling state and a conveying state. In the idling state, the transfer conveyor unit does not transfer goods between the conveyor device and the transport vehicle. In particular, in the idling state, the transfer conveyor unit solely supports the goods to be transferred between the conveyor device and the transport vehicle or waits for goods to be transferred. In the conveying state, the transfer conveyor unit is driven for transferring the goods between the conveyor device and the transport vehicle. In particular, in the conveying state, the transfer conveyor unit is adapted to transfer the goods from the conveyor device to the transport vehicle or vice versa.

Such a preferred embodiment is particularly suitable for transferring goods between the transport vehicle and conveyor device that have excess length in the conveying direction. Further, the transfer conveyor unit allows the dock station arrangement to be connected more flexibly to the conveyor device.

According to a further preferred embodiment, the support conveyor module has a transport vehicle receiving opening orthogonal to the conveying direction for receiving a transport vehicle in the transport vehicle receiving space.

The transport vehicle receiving opening is understood to be as passageway for the transport vehicle to the transport vehicle receiving space. The transport vehicle receiving space is accessible for the transport vehicle via the transport vehicle receiving opening. In particular, the transport vehicle receiving opening provides a barrier free access for the transport vehicle. In particular, the transport vehicle receiving opening is adapted to provide a passageway to the transport vehicle receiving space for the transport vehicle driving on the ground. In particular, no elements of the first and/or second support conveyor unit, no elements of a frame of the first and/or second support conveyor unit, extend into the transport vehicle receiving opening. Preferably, the transport vehicle receiving opening extends with a height from the bottom side towards the conveying plane.

Preferably, the transport vehicle receiving opening is large enough to allow a transport vehicle to passage to or from the transport vehicle receiving space. Preferably, the width and the height of the transport vehicle receiving opening is the same as the width and the height of the transport vehicle receiving space orthogonal to the conveying direction. In particular, the preferred width and/or height of the transport vehicle receiving space applies accordingly to the width and/or height of the transport vehicle receiving opening. Preferably, the transport vehicle receiving opening extends from the conveying plane to the ground.

In particular, such a dock station arrangement is compatible with a larger amount of different transport vehicles in comparison to dock station arrangements known from the prior art.

In a further preferred embodiment, the dock station arrangement comprises a clutching device. The clutching device is adapted for coupling the first and/or second support conveyor unit and/or the transfer conveyor unit with a drive unit for driving the at least one drivable support conveyor and/or the at least one drivable transfer conveyor of the respective conveyor units in the conveying state. Further, the clutching device is adapted for uncoupling the first and/or second support conveyor unit and/or the transfer conveyor unit from the drive unit in the idling state.

The clutching device may also be known as coupling. Preferably, the clutching device is a mechanical clutching device. Further preferably, the clutching device is an electromagnetic clutching device. The clutching device may be a combination of a mechanical and electromagnetic clutching device. In particular, the clutching device is some kind of gear or transmission coupling.

Preferably, the dock station arrangement solely comprises one clutching device. In this preferred embodiment, the one clutching device is adapted for coupling and uncoupling the first and/or second support conveyor unit and/or the transfer conveyor unit with a drive unit. It may also be preferred that the dock station arrangement comprises two clutching devices. In this preferred embodiment, one clutching device is adapted for coupling and uncoupling the first and second support conveyor unit and the other clutching device is adapted for coupling the transfer conveyor unit. However, it may also be preferred, that one clutching device is adapted for coupling and uncoupling the first support conveyor unit and the other clutching device is adapted for coupling the second support conveyor unit and the transfer conveyor unit. In a further preferred embodiment, the dock station arrangement may comprise three clutching devices. In such a preferred embodiment, it is preferred that each of the three clutching devices is adapted for coupling and uncoupling one of the respective conveyor units.

In particular, the clutching device is adapted for coupling and uncoupling the at least one drivable support conveyor of the respective support conveyor unit and/or the at least one drivable transfer conveyor of the transfer conveyor unit.

The ability to provide the driving power for transferring goods between the transport vehicle and the conveyor device by means of the clutching devices minimizes the need for several drive units. In particular, the dock station arrangement may be adapted to be solely driven by means of a single drive unit.

Further, with the clutching device driving power can be provided along the conveying direction to the at least one drivable support conveyor and/or the at least one drivable transfer conveyor where needed. This may minimize the driving power to the level needed, which in turn minimizes costs.

In another preferred embodiment, the dock station arrangement comprises a detection device for detecting a presence and/or an absence of the goods to be transferred between the conveyor device and the transport vehicle.

For example, the detection device may be a mechanical, a capacity, an electromagnetic, a magnetic, an optical detection device or alike adapted to detect the presence and/or absence of the goods. In particular, the detection device may be a combination thereof.

Preferably, the detection device is adapted to communicate signals. In particular, the detection device is adapted for a bidirectional communication. In this preferred embodiment, the detection device may send signals and receive signals. A signal may be measuring signal such as absence and/or presence of the goods or a status information of the detection device. A status information of the detection device may include the operation mode, error information etc. Further, a signal, in particular a receiving signal, may be a trigger signal to trigger a measurement with the detection device.

Preferably, the detection device is signaling coupled to the clutching device. The detection device may be signaling coupled by means of a wire. However, it may also be preferred that the detection device is adapted to be wirelessly signaling coupled. Further, it may be preferred, that the detection device is adapted to be signaling coupled with a drive unit.

Preferably, the detection device is arranged along the conveying direction above the conveying plane. In particular, the detection device is arranged adjacent to the first and/or second conveyor unit orthogonal to the conveying direction. Further, preferably, the detection device is arranged below the conveying plane. In particular, the detection device is arranged below the first and/or second support conveyor unit. Further preferably, at least one of the at least one drivable support conveyor and/or the at least one passive support conveyor of the first and/or second support conveyor unit is or comprises the detection device.

By means of the detection device the position of the goods to be transferred between the conveyor device and the transport vehicle can be determined and the driving power can be provided to the respective at least one drivable support conveyor and/or at least one drivable transfer conveyor. This may minimize the driving power to the level needed, which in turn minimizes costs.

According to another preferred embodiment, the detection device has a first and second sensor unit arranged at a distance from each other along the conveying direction.

The respective sensor unit may be a passive and/or active sensor unit. A passive sensor unit requires external energy to provide a signal, wherein the active sensor unit generates the signal by itself due the measurement principle.

In particular, the first and/or second sensor unit is a proximity sensor. The proximity sensor may be an inductive, capacity or optical proximity sensor. Further, preferably, the first and/or second sensor unit is a camera. It may further be preferred that the first and/or second sensor unit is some kind of a light curtain. In particular, at least one of the at least one drivable support conveyor and/or the at least one passive support conveyor of the first and/or second conveyor unit is or comprises the first and/or second sensor unit. Further preferably, at least one of the at least one drivable transfer conveyor and/or the at least one passive transfer conveyor of the transfer conveyor unit is or comprises the first and/or second sensor unit.

The first and/or second sensor unit may comprise one or more sensors.

By means of arranging a first and second sensor unit at a distance from each other along the conveying direction, the position of goods to be transferred may be determined more precisely. This enables to provide the driving power needed along the conveying direction to the respective at least one drivable support conveyor and/or at least one transfer conveyor better.

According to a further preferred embodiment, the dock station arrangement comprises a control unit. The control unit is adapted for communicating the presence and/or absence of the goods to be transferred between the conveyor device and the transport vehicle. Preferably, the clutching device comprises the control unit.

In a further preferred embodiment, the control unit is adapted to switch the first and/or second support conveyor unit and/or the transfer conveyor unit into the conveying state if the detection device detects the presence of the goods. Further, the control unit is adapted to switch the first and/or second support conveyor unit and/or the transfer conveyor unit into the idling state if the detection device detects the absence of the goods.

In particular, the control unit is adapted to switch the first and/or second support conveyor unit and/or the transfer conveyor unit into the conveying state if the first and/or second sensor unit detects the presence of goods. Further, the control unit is adapted to switch the first and/or second support conveyor unit and/or the transfer conveyor unit into the idling state if the first and/or second sensor unit detects the absence of goods.

According to a further preferred embodiment, the clutching device is signaling coupled with the detection device and/or the control unit. Further, the clutching device is adapted to be signaling coupled with the drive unit.

Preferably, the clutching device is signaling coupled with the detection device and/or the control unit by means of a wire. However, it may also be preferred that the clutching device is wirelessly signaling coupled with the detection device and/or the control unit. Further, preferably, the clutching device is adapted to be signaling coupled with the drive unit by means of a wire. However, in particular, the clutching device is adapted to be wirelessly signaling coupled with the drive unit.

Such a preferred embodiment has the advantage to quickly provide the signals needed to provide the drive power needed along the conveying direction where needed. This minimizes the total driving power provided and, thus, minimizes costs.

In another preferred embodiment, the first and/or second support conveyor unit and/or the transfer conveyor unit comprises a transmission unit for coupling the at least one drivable support conveyor and/or the at least one drivable transfer conveyor with the clutching device.

The transmission unit may comprise some kind of a belt. In particular, the transmission unit may comprise a flat belt, a V-belt, a V-ribbed belt, a timing belt, a round belt or alike.

Preferably, the transmission unit comprises some kind of a tensioning roller.

Such a preferred dock station arrangement has the advantage to provide the driving power along the conveying direction where needed.

In a further preferred embodiment, the dock station arrangement comprises the drive unit. Preferably, the drive unit is a mobile driving device. The drive unit is connected to the clutching device and/or the transfer conveyor unit to drive the first and/or second support conveyor unit and/or the transfer conveyor unit in the conveying state. Preferably, the drive unit comprises the control unit.

Preferably, the drive unit is or comprises a motor, in particular an electric motor.

The mobile driving device is a driving device for driving some kind of a conveyor, in particular a roller conveyor. Such a mobile driving device comprises a chassis frame, a traction device mounted to said chassis frame, wherein said traction device is adapted to move said chassis frame on a supporting surface, a first drive unit mechanically coupled to said traction device to transmit a driving force to said traction device for moving said chassis frame on said supporting surface, a roller driving device mounted to said chassis frame, wherein said roller driving device is adapted to be mechanically coupled to one or a plurality of rollers of said roller conveyor, a second drive unit mechanically coupled to said roller driving device for transmitting a conveying force to said roller driving device, wherein said mobile driving device has first, second, third and fourth axis which are parallel to each other in a straightforward driving condition wherein said mobile driving device moves along a straight line, said first and said second axis are arranged at a front end of said chassis frame and said third and said fourth axis are arranged at a rear end of said chassis frame, and wherein in said straightforward driving condition said first axis is arranged in a first offset distance to said second axis, and said third axis is arranged in a second offset distance to said fourth axis.

Reference is made to EP19162230.7 regarding further details of the mobile driving device.

In particular, the drive unit is mechanically and electrically connected to the clutching device.

The mobile driving device employed for driving the rollers of a roller conveyor is mobile, such that the driving device can be moved relatively to the roller conveyor and be positioned at different places at the roller conveyor. By this, the driving action effected by the driving device onto the rollers of the roller conveyor can be provided at different positions along the conveying direction and thus can drive different at least one drivable support conveyors and/or drivable transfer conveyors.

Further, another preferred embodiment of the dock station comprises the transport vehicle. Preferably, the transport vehicle is an automated guided vehicle or an autonomous mobile robot.

According to a second aspect of the invention, the object is achieved by a conveyor system for conveying goods according to claim 13. The conveyor system comprises a dock station arrangement according to the first aspect of the invention or any of its preferred embodiments described herein. Further, the conveyor system comprises at least one conveyor device.

According to a third aspect of the invention, the object is achieved by a method for transferring goods, in particular a goods carrier, from a transport vehicle to a conveyor device by means of a dock station arrangement. In particular, the dock station arrangement is a dock station arrangement according to the first aspect of the invention or any of its preferred embodiments described herein. The method is characterized by the steps:
- providing the dock station arrangement in an idling state; and
- receiving the transport vehicle in a transport vehicle receiving space with the goods loaded to be transferred; and
- unloading the goods on a first and second support conveyor unit from the transport vehicle received in the transport vehicle receiving space of the dock station arrangement; and
- detecting a presence and/or an absence of the goods by means of a detection device; and
- switching the dock station arrangement from the idling state into a conveying state to transfer the received goods to the conveyor device if the presence of the goods is detected by means of the detection device; and
- transferring the unloaded goods along a conveying direction to the conveyor device; and/or
- switching the dock station arrangement from the conveying state into the idling state to stop driving the first and/or second support conveyor unit and/or the transfer conveyor unit if the absence of the goods is detected.

According to a first preferred embodiment of the method, wherein the dock station arrangement comprises a first and second sensor unit, the method is characterized by the steps:
- switching the dock station arrangement from the idling state into the conveying state to transfer the received goods to the conveyor device if the presence of the goods is detected by a first and/or second sensor unit; and/or
- switching the dock station arrangement from the conveying state into the idling state to stop driving the first and/or second support conveyor unit and/or transfer conveyor unit if the absence of the goods is detected by the respective sensor unit; and/or
- providing a drive unit for transferring the goods along a conveying direction; and/or
- wherein the drive unit triggers the step of switching the docking station arrangement from the idling state into a conveying state to transfer the received goods to the conveyor device if the presence of the goods is detected by means of the detection device and/or from the conveying state into the idling state to stop driving the first and/or second support conveyor unit and/or the transfer conveyor unit if the absence of the goods is detected.

The conveyor system and the method of the invention and the preferred embodiments thereof can be preferably conducted using the dock station arrangement explained beforehand. It is understood that the specific aspects and features of the conveyor system and of the method as well as the functions thereof correspond to the respective features, functions and aspects of the dock station arrangement as described beforehand and thus reference is made to the explanation given hereto with reference to the dock station arrangement.

Preferred embodiments of the invention are described with reference to the figures. In the figures
- Fig. 1a,b: are a top and side view of a preferred embodiment of the dock station arrangement;
- Fig. 2a,b: are a top and side view of a further preferred embodiment of the dock station arrangement;
- Fig. 2c: a sided view of a preferred embodiment of a drive unit;
- Fig. 3: is a schematic view of another preferred embodiment of the dock station arrangement;
- Fig. 4a,b: are a top and side view of a preferred embodiment of the conveyor system;
- Fig.5: is a schematic view of a preferred embodiment of the method for transferring a goods carrier from a transport vehicle to a conveyor device by means of a dock station arrangement;
- Fig. 6: is a schematic view of a further preferred embodiment of the method for transferring a goods carrier from a transport vehicle to a conveyor device by means of a dock station arrangement; and
- Fig. 7a-d: are side views of another preferred embodiment of the dock station arrangement showing different steps of transferring a goods carrier between a conveyor device and a transport vehicles.

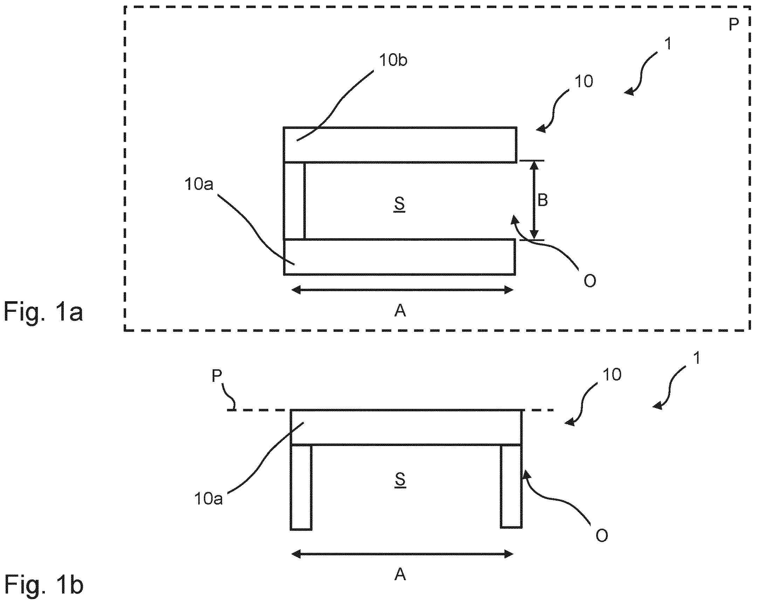

Figs. 1a,b show a preferred embodiment of the dock station arrangement 1 in a top view, Fig. 1a, and a side view, Fig. 1b. The dock station arrangement 1 comprises a support conveyor module 10. The support conveyor module 10 has a first and a second support conveyor unit 10a,b. The respective support conveyor units 10a,b extend along a conveying direction A with a length, orthogonal to the conveying direction A in a conveying plane P with a width, and orthogonal to the conveying plane P with a height. The respective support conveyor units 10a,b are arranged spaced apart from each other orthogonal to the conveying direction A. The respective support conveyor units 10a,b are arranged parallel to each other.

The distant arrangement between the first and second support conveyor unit 10a,b orthogonal to the conveying direction defines a transport vehicle receiving space S with a gap B. The gap B defines the distance between the respective support conveyor units 10a,b orthogonal to the conveying direction A. Making reference to Fig. 1b, it can be seen that the respective support conveyor units 10a,b are mounted at a certain height. Depending on the gap B and the height of the respective support conveyor units 10a,b, transport vehicle receiving space S is defined.

The dock station arrangement 1 may receive a transport vehicle 3 (not shown) in the transport vehicle receiving space S through the transport vehicle receiving opening O. The transport vehicle receiving opening O is barrier free. The transport vehicle receiving opening O provides a passageway for receiving the transport vehicle 3 in the transport vehicle receiving space S. In particular, neither elements of the first nor the second support conveyor unit, for example elements of a frame, extend into the transport vehicle receiving opening.

The first and second support conveyor unit 10a,b define a conveying plane P (dotted lines in figures 1a,b). In this preferred embodiment, the conveying plane P is even. However, it may also be preferred that first and second support conveyor unit 10a,b define a conveying plane having curvatures along the conveying direction A and/or orthogonal to the conveying direction (not shown). In particular, the conveying plane P is aligned horizontally when the dock station arrangement 1 is in the installation position or operation position. However, the conveying plane P may also be inclined, when the dock station arrangement is in the installation position or operation position.

The first and second support conveyor unit 10a,b define a conveyor track for transferring goods between a transport vehicle 3 (not shown) and a conveyor device 70 (not shown). Preferably, the conveyor track lies within the conveyor plane P.

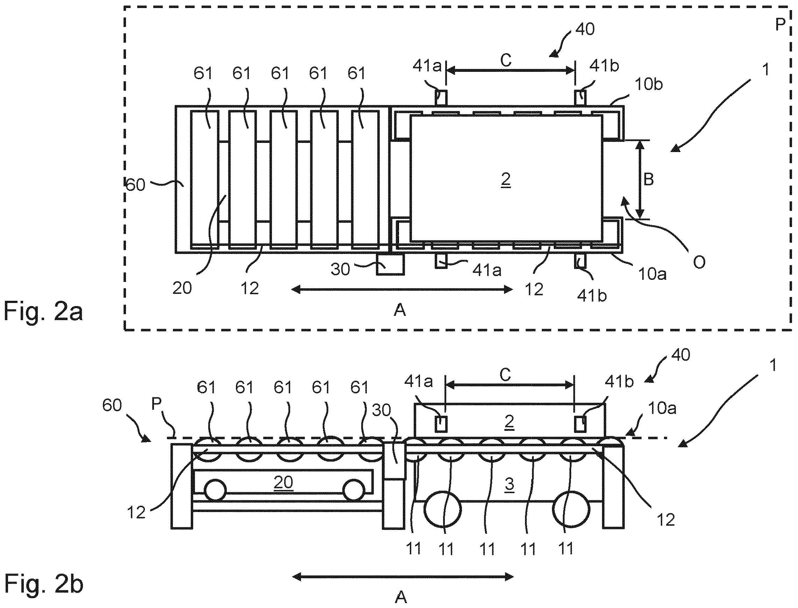

Making reference to Figs. 2a,b, a further preferred embodiment of a dock station arrangement 1 is shown comprising a goods carrier 2 to be transferred between a transport vehicle 3 and a conveyor device 70 (not shown). This preferred embodiment is based on the embodiment of the dock station arrangement 1 shown in Figs. 1a,b. The dock station arrangement 1 shown in Figs. 2a,b additionally comprises a transfer conveyor unit 60, a detection device 40, a clutching device 30, a drive unit 20 and a transmission unit 12.

The transfer conveyor unit 60 is arranged adjacent to the support conveyor module 10 along the conveying direction A. The transfer conveyor unit 60 and the support conveyor module 10 define the conveying plane P (dotted line).

The transfer conveyor unit 60 extends along a conveying direction A with a length, orthogonal to the conveying direction A in the conveying plane P with a width and orthogonal to the conveying plane P with a height. In this preferred embodiment, the transfer conveyor unit and the support conveyor module 10 have the same width and height. The transfer conveyor unit 60 and the respective support conveyor units 10a,b define the same conveying plane P. In particular, the transfer conveyor unit 60 and the respective support conveyor units 10a,b define the conveyor track.

In this preferred embodiment, the respective support conveyor units 10a,b and the transfer conveyor unit 60 have conveyor rollers. The first support conveyor unit 10a solely comprises six drivable support conveyors 11 that are six drivable support conveyor rollers. The second support conveyor unit 10b solely comprises six passive support conveyors 13 that are six passive support conveyor rollers. Each of the five conveyor rollers of the transfer conveyor unit 60 is a drivable transfer conveyor 61. A transmission unit 12 connects the respective drivable conveyors 11, 61 of the transfer conveyor unit 60 and the first support conveyor unit 10a with the clutching device 30. In this preferred embodiment, the drivable support conveyors 11 and the drivable transfer conveyors 61 comprise a gear wheel (not shown) to interact with the transmission unit 12. Further, the clutching device 30 is connected to the drive unit 20.

The clutching device 30 is arranged at the intersection between the first support conveyor unit 10a and the transfer conveyor unit 60. By means of the clutching device 30, the first support conveyor unit 10a and the transfer conveyor unit 60 may be switched back and forth between an idling state and a conveying state. Meaning, in the conveying state, the drivable support conveyors 11 of the first support unit 10a and the drivable transfer conveyors 61 of the transfer conveyor unit 60 are driven by means of the drive unit 20 via the transmission unit 12. In the idling state, however, neither the drivable support conveyors 11 of the first support conveyor unit 10a nor the drivable transfer conveyors 61 of the transfer conveyor unit 60 are driven by means of the drive unit 20 via the respective transmission unit 12.

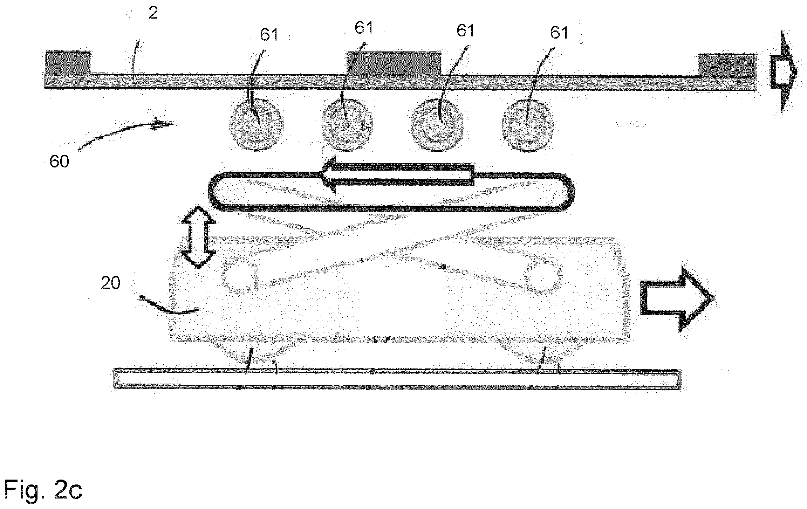

In this preferred embodiment, the drive unit 20 is a mobile driving device for a roller conveyor. The mobile driving device 20 is positioned underneath the transferred support conveyor unit 60, in particular underneath the drivable transfer conveyors 61. Fig. 2c shows a preferred embodiment of the mobile driving device 20. Preferably, the mobile driving device may provide its driving power to the respective drivable conveyors 11, 61 via the clutching device 30 and the transmission unit 12. However, it may also be preferred that the mobile driving device provides its driving power to the at least one drivable support conveyors 11 via the drivable transfer conveyors 61 of the transfer conveyor unit, the transmission unit 12 and the clutching device 30.

To allow an energy-efficient and smooth transfer of goods between the transport vehicle 3 and the conveyor device 70, the dock station arrangement 1 comprises a detection device 40 having a first sensor unit 41 a and a second sensor unit 41 b. The first and second sensor units 41a,b are adapted for detecting a presence and absence of goods to be transferred. To detect the goods to be transferred, the first and second sensor unit 41a,b are arranged at a distance C from each other along the conveying direction A. It may be noted that the detection device 40 may also comprise a sensor unit that continuously detects the presence and absence of the goods to be transferred along the conveying direction A. In the shown installation position, the first and second sensor units 41a,b are arranged above the support conveyor units 10a,b. However, it may also be preferred that the detection device 40, in particular its first and second sensor units 41a,b are arranged below the first and second support conveyor units 10a,b in the installation position. Further, it may also be preferred that at least one, preferably all, drivable support conveyor 11 incorporate the detection device 40, in particular a first or second sensor unit 41a,b.

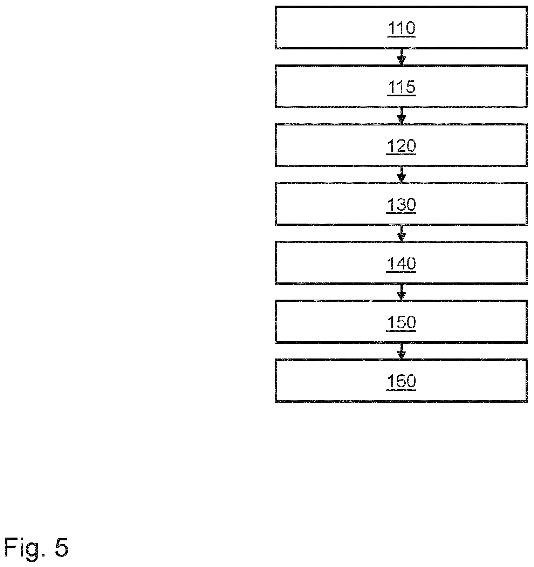

The transport vehicle 3 shown in Figs. 2a,b may preferably be an AGV or AMR. The transport vehicle 3 has a goods carrier 2 loaded onto it and is parked in the dock station arrangement 1 waiting for the goods carrier 2 to be transferred from the transport vehicle 3 to a conveyor device (not shown). To provide the goods carrier 2 to the dock station arrangement 1, the transport vehicle 3 is driven into the transport vehicle receiving space S of the dock station arrangement 1 via the transport vehicle receiving opening O. The transport vehicle receiving opening O is barrier free providing a passageway for the transport vehicle to the transport vehicle receiving space S from the ground to the conveying plane P. In this position, the transport vehicle 3 is arranged between the first and second support conveyor units 10a,b. The transport vehicle 3 may also extend orthogonal to the conveying direction A underneath the first and second support conveyor units 10a,b. A detailed description of the different steps of transferring the goods between the conveyor device and the transport vehicle 3 is made in reference to Figs. 5 and 6 and Figs. 7a-d.

This preferred arrangement allows to provide the driving power of the drive unit 20 to the first support conveyor unit 10a and/or the transfer conveyor unit 60 in the conveying state, depending on where the driving power is needed at the dock station arrangement along the conveying direction A.

Making reference to fig. 2c, a preferred embodiment of the mobile driving device is shown. The mobile driving device 20 comprises a chassis frame, which is supported on a ground surface by four wheels. The wheels are positioned basically at the four corners of the device. The wheels are arranged to support the chassis frame on a ground surface. Basically, the wheels may support the device on rails or on any surface provided within a frame like a roller conveyor frame. Each of the wheels is rotatable about a wheel axis, wherein the wheel axes at the one end of the chassis frame are parallel and offset to each other and the wheel axes at the other end of the chassis frame are parallel and offset to each other.

Inside the chassis frame, an electric motor is installed. The electric motor is coupled to an endless drive trum. The endless drive trum is configured as a belt transmission comprising two parallel endless chains with frictional pads at the outer surface. These two parallel chains serve to couple by frictional engagement to the rollers of a transfer conveyor unit 60 and by driving the endless chains, the rollers can be put into rotation to convey a goods carrier 2 lying on top of the transfer conveyor unit 60.

As can be seen in Fig. 2c, the endless chain is coupled to the chassis frame via a lifting device, which allows to raise the endless chain or to lower the endless chain in relation to the ground surface. By this, the endless chain can be coupled to the rollers of a roller conveyor such as to have frictional engagement to a bottom circumferential section of the rollers. The lifting device may exert a contact pressure sufficient to transfer a frictional driving force to the rollers for conveying the pallet lying on top of the rollers. As can be seen in Fig. 2c in a typical mode of operation, wherein the goods carrier 2 shall be conveyed along the conveying direction by the mobile driving device 20, the mobile driving device 20 is driven across the ground surface with a constant speed v and the endless chain is driven with a constant speed 2 * v, which is twice the speed of the chassis frame over the ground surface. The endless chain is driven in a direction such that the upper section moves in an opposite direction in relation to the movement of the chassis frame over the ground surface. By this, the goods carrier 2 and the chassis frame will move synchronously along the track of the dock station arrangement 1 and the goods carrier 2 can be conveyed by the mobile driving device 20 along the conveying direction.

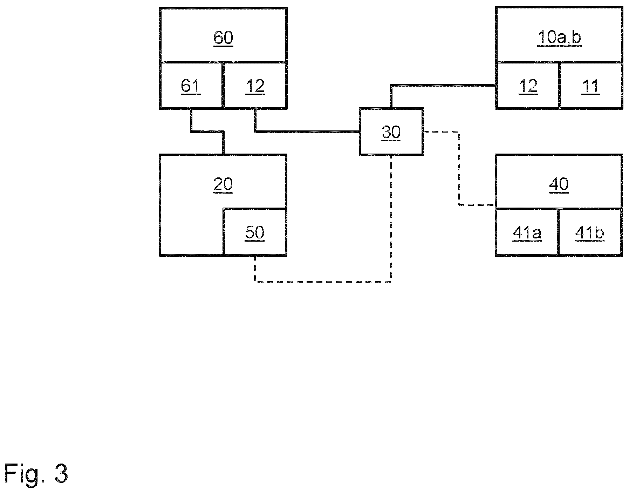

Fig. 3 is a schematic view of a preferred coupling of a dock station arrangement 1 between the drive unit 20, the clutching device 30, the detection device 40, the control unit 50, and the respective support conveyor units 10a,b as well as the transfer conveyor unit 60. In this preferred embodiment, the drive unit 20 comprises the control unit 50.

In the conveying state, it is preferred that the drive unit 20 is mechanically coupled with the at least one drivable transfer conveyor 61 to provide a driving power as described with regards to fig. 2c. The driving power is provided to the at least one drivable support conveyor 11 of the respective support conveyor units 10a,b via a transmission unit 12 connecting the clutching device 30 and the at least one drivable transfer conveyor 61 and via a transmission unit 12 connecting the clutching device 30 with the drivable support conveyor 11.

In the idling state, the clutching device 30 is not connected with the drivable support conveyor 11 via the transmission unit 12. Further, the clutching device 30 is not connected with the drivable transfer conveyor 61 via the transmission unit 12. In particular, in the idling state, the drive unit is not coupled with the drivable transfer conveyors 61.

Whether the dock station arrangement 1 is switched into the conveying state or the idling state depends on the detection device 40, in particular its first and second sensor units 41a,b, that are signaling coupled to the control 50 unit via the clutching device 30. However, it may also be preferred that the respective sensor units 41 a,b are directly signaling coupled with the control unit 50. Signaling coupled devices and/or units may be signaling coupled by wire or wireless.

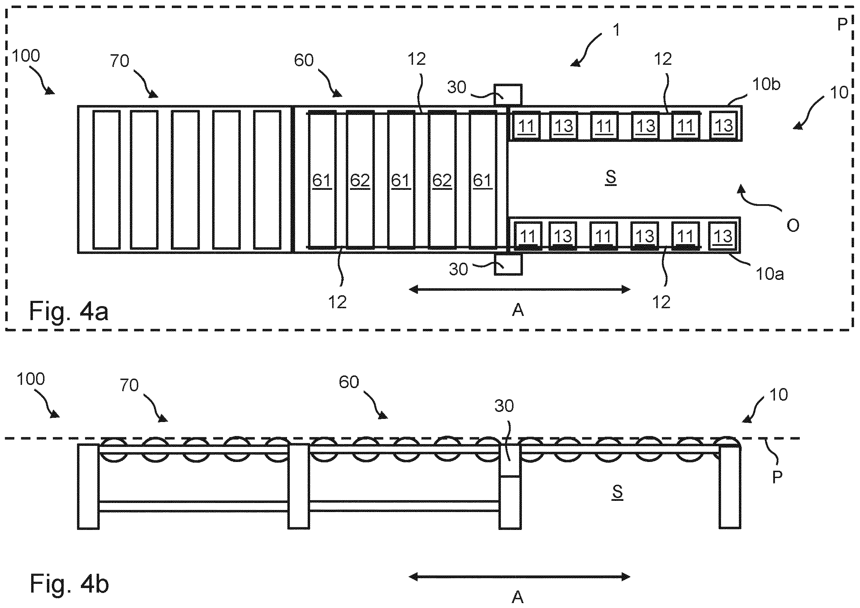

Making reference to Fig. 4a,b, a preferred embodiment of a conveyor system 100 for conveying goods, in particular a goods carrier 2. The conveyor system 100 comprises a further preferred embodiment of a dock station arrangement 1 and a conveyor device 70. The conveyer device 70 is arranged adjacent to the dock station arrangement 1 along the conveying direction A. The dock station arrangement 1 and the conveyor device 70 define a conveyor plane P (dotted lines). In particular, at the interface between the dock station arrangement 1 and the conveyor device 70 both have the same height and width.

This preferred dock station arrangement 1 shown in figs. 4a,b is based on the embodiment of the dock station arrangement 1 shown in figs. 2a,b. Contrary to the embodiment of the dock station arrangement 1 shown in figs. 2a,b the respective support conveyor units 10a,b of the dock station arrangement 1 shown in figs. 4a,b each have three drivable support conveyors 11 and three passive support conveyors 13. Further, the transfer conveyor unit 60 has three drivable transfer conveyors 61 and two passive transfer conveyors 62. The drivable support conveyors 11 of the first support conveyor unit 10a are connected with the drivable transfer conveyors 61 of the transfer conveyor unit 60 by means of one clutching device 30 and two transmission units 12 and the drivable support conveyors 11 of the second support conveyor unit 10b are connected with the drivable transfer conveyors 61 of the transfer conveyor unit 60 by means of a second clutching device 30 and two further transmission units 12

A goods carrier 2, transport vehicle 3, a drive unit 20, a detection device 40, a control unit 50 are not shown in figs. 4a,b.

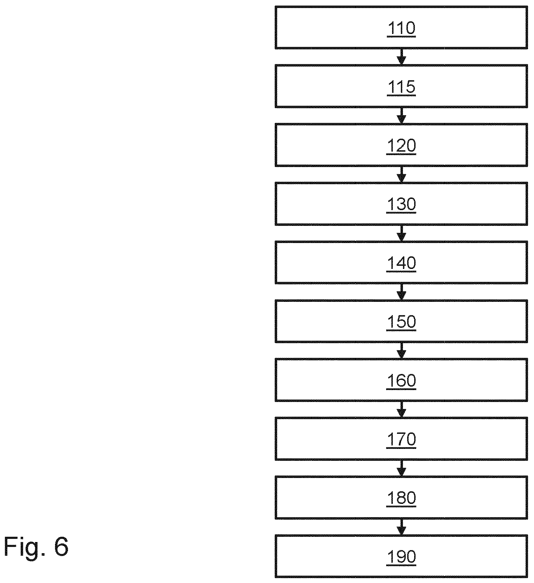

Figs. 5 and 6 make reference to preferred embodiments of a method for transferring goods, in particular a goods carrier 2, from a transport vehicle 3 to a conveyor device 70 by means of a dock station arrangement, in particular a dock station arrangement described herein.

Making reference to fig. 5, a first preferred embodiment of the method may comprise the following steps alone or in combination:
- providing 110 the dock station arrangement 1 in an idling state; and
- receiving 115 the transport vehicle 3 in a transport vehicle receiving space S with goods loaded to be transferred; and
- unloading 120 the goods on a first and second support conveyor unit 10a,b from the transport vehicle 3 received in the transport vehicle receiving space S of the dock station arrangement 1; and
- detecting 130 a presence and/or an absence of the goods by means of a detection device 40; and
- switching 140 the dock station arrangement 1 from the idling state into a conveying state to transfer the received goods to the conveyor device 70 if the presence of the goods is detected by means of the detection device 40; and
- transferring 150 the unloaded goods in a conveying direction A to the conveyor device 70; and/or
- switching 160 the dock station arrangement 1 from the conveying state into the idling state to stop driving the first and/or second support conveyor unit 10a,b and/or the transfer conveyor unit 60 if the absence of the goods is detected.

Making reference to fig. 6, the detection device 40 of the dock station arrangement 1 comprises a first and second sensor unit 41a,b and a further preferred embodiment of the method may comprise the following steps alone or in combination:
- switching 170 the dock station arrangement 1 from the idling state into the conveying state to transfer the received goods to the conveyor device 70 if the presence of the goods is detected by a first and/or second sensor unit 41a,b; and/or
- switching 180 the dock station arrangement 1 from the conveying state into the idling state to stop driving the first and/or second support conveyor unit 10a,b and/or transfer conveyor unit 60 if the absence of the goods is detected by a respective sensor unit 41a,b; and/or
- providing 190 a drive unit 20 for transferring the goods in a conveying direction A; and/or
- wherein the drive unit 20 triggers the step of switching the docking station arrangement 1 from the idling state into a conveying state to transfer the received goods to the conveyor device 70 if the presence of the goods is detected by means of the detection device 40 and/or from the conveying state into the idling state to stop driving the first and/or second support conveyor unit 10a,b and/or the transfer conveyor unit 60 if the absence of the goods is detected.

The steps of the preferred embodiments of the method described herein can be performed alone or in combination. In particular, the steps can be carried out in the order mentioned. However, it may be preferred that the mentioned steps can be carried out in any desired order.

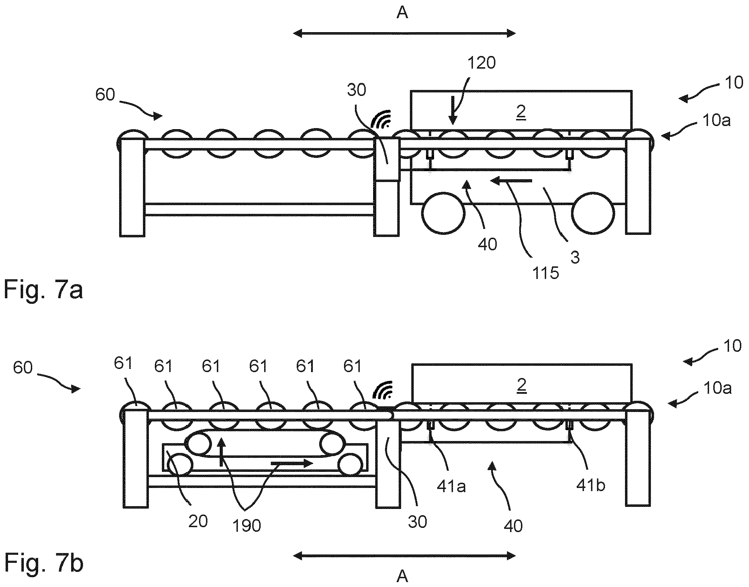

Making reference to figs. 7a-d, different side views of a further preferred embodiment of the dock station arrangement 1 are shown based on the embodiment referred to with regards to figs. 2a,b. The first and second sensor units 41a,b are arranged below the conveying plane P. The respective sensor units 41a,b of the detection device 40 are signaling coupled to the clutching device 30 by wire. The clutching device 30 is wirelessly signaling coupled to the drive unit 20. The drive unit 20 is a mobile driving device.

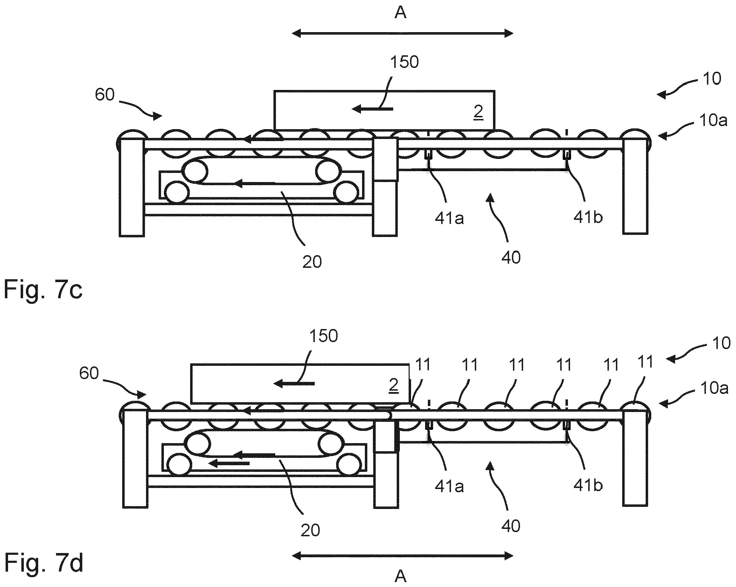

Figs. 7a-d show different steps of transferring a goods carrier 2 between a conveyor device 70 (not shown) and a transport vehicle 3. Figs. 7a,b,d make reference to the dock station arrangement 1 in the idling state. Fig. 7c refers to the dock station arrangement 1 in the conveying state.

Fig 7a shows a provided dock station arrangement 1 in the idling state according to step 110. The dock station arrangement is receiving 115 a transport vehicle 3 in a transport vehicle receiving space S with a goods carrier 2 loaded via the transport vehicle receiving opening O. Further, fig. 7a shows the step of unloading 120 the goods carrier 2 on the first and second support conveyor unit 10a,b of the support conveyor module 10 from the transport vehicle 3 received in transport vehicle receiving space S of the dock station arrangement 1. The presence of the unloaded goods carrier 2 is detected 130 by means of the detection device 40, i.e. by means of the first and second sensor unit 41a,b. The first and second sensor unit communicate the detection signal to the signaling coupled clutching device 30. The clutching device 30 in turn wirelessly communicates the detection signal, i.e. the presence of the goods carrier 2, to the mobile driving device 20 (that is the drive unit). The presence of the goods carrier 2 may be communicated via a control unit 50 (not shown).

Fig. 7b shows the step of providing 190 the drive unit 20, wherein the drive unit 20 is the mobile driving device as made reference to in fig. 2c. When the mobile driving device is provided, it is parked in the transfer conveyor unit 60 underneath the drivable transfer conveyors 61. The endless drive trum - that is configured as a belt transmission comprising two parallel endless chains with frictional pads at the outer surface - is brought into engagement with the drivable transfer conveyors 61 for providing the driving power of the drive unit to the drivable transfer conveyors 61 and the drivable support conveyors 11.

Making reference to fig. 7c, the mobile driving device triggers the step of switching 170 the dock station arrangement 1 from the idling state into the conveying state to transfer the received goods carrier to the conveyor device 70 as the presence of the goods carrier 2 is detected by the first and second sensor unit 41a,b. In particular, when switching from the idling state to the conveying state, the clutching device 30 is switched on. In the conveying state, a switched clutching device 30 is engaged with the transmission units 12 to provide the driving power from the drive unit 20 for transferring the goods carrier 2 from the transport vehicle 3 to the conveyor device 70. Thereby, the switched on clutching device 30 connects the drivable transfer conveyors 61 to the clutching device 61 via a first transmission unit 12 and connects the drivable support conveyors 11 via a second transmission unit 12. Thus, the driving power is provided as described in reference to fig. 3. Subsequently, the unloaded goods carrier 2 is transferred 150 along a conveying direction A to the conveyor device 70.

Making reference to fig. 7d, the dock station arrangement 1 is switched 160, 180 from the conveying state into the idling state to stop driving the first support conveyor unit 10a as soon as the absence of the goods carrier is detected by the respective sensor units 41a,b. In particular, when switching to the idling state, the clutching device 30 is switched off. In the idling state, a switched off clutching device 30 is note engaged with the transmission units 12 and, thus, does not provide a driving power from the drive unit 20 for transferring the goods carrier 2 from the transport vehicle 3 to the conveyor device 70. Thereby, the switched off clutching device 30 does not connect the drivable transfer conveyors 61 to the clutching device 30 via a first transmission unit 12 and does not connect the drivable support conveyors 11 via a second transmission unit 12. As soon as the goods carrier is located on the transfer conveyor unit 60 above the mobile driving device 20, the mobile driving device starts transferring the goods carrier to the conveyor device 70 (not shown).

### Reference Signs

- 1: Dock station arrangement
- 2: goods carrier
- 3: transport vehicle
- 10: support conveyor module
- 10a,b: first and second support conveyor unit
- 11: at least one drivable support conveyor
- 12: transmission unit
- 13: at least one passive support conveyor
- 20: drive unit
- 30: clutching device
- 40: detection device
- 41a,b: first and second sensor unit
- 50: control unit
- 60: transfer conveyor unit
- 61: at least one drivable transfer conveyor
- 62: at least one passive transfer conveyor
- 70: conveyor device
- 100: conveyor system
- A: conveying direction
- B: gap between first and second support conveyor unit
- C: distance a first and second sensor unit are arranged from each other along the conveying direction
- O: transport vehicle receiving opening
- P: conveying plane
- S: transport vehicle receiving space

## Claims

1. Dock station arrangement (1) for transferring goods, in particular a goods carrier (2), between a conveyor device (70) and a transport vehicle (3), comprising
- a support conveyor module (10) having a first and second support conveyor unit (10a,b) defining a conveying plane (P), and
- the first and/or second support conveyor unit (10a,b) having at least one drivable support conveyor (11) and/or at least one passive support conveyor (13) for conveying the goods on the conveying plane (P) along a conveying direction (A), and
- the first and/or second support conveyor unit (10a,b) being adapted for switching back and forth between an idling state and a conveying state, wherein the respective at least one drivable support conveyor (11) is adapted
• to be driven in the conveying state for transferring the goods between the conveyor device (70) and the transport vehicle (3) and
• not to bed driven in the idling state,
**characterized in that**
- the first and second support conveyor unit (10a,b) are arranged spaced apart from each other orthogonal to the conveying direction (A) defining a transport vehicle receiving space (S) with a gap (B).

2. Dock station arrangement (1) according to claim 1, **characterized by** a transfer conveyor unit (60) defining the conveying plane (P), the transfer conveyor unit (60) comprising at least one drivable transfer conveyor (61) and/or at least one passive transfer conveyor (62) for conveying the goods on the conveying plane (P) along the conveying direction (A), and wherein the transfer conveyor unit (60)
- is arranged along the conveying direction (A) adjacent to the first and second support conveyor unit (10a,b) for transferring the goods between the conveyor device (70) and the transport vehicle (3), and
- adapted for switching back and forth between the idling state and the conveying state, wherein the respective at least one drivable transfer conveyor (61) is adapted to be driven in the conveying state for transferring the goods between the conveyor device (70) and the transport vehicle (3) and not to be driven in the idling state.

3. Dock station arrangement (1) according to any of the preceding claims 1-2, **characterized in that** the support conveyor module (10) has a transport vehicle receiving opening (O) orthogonal to the conveying direction (A) for receiving a transport vehicle (3) in the transport vehicle receiving space (S).

4. Dock station arrangement (1) according to any of the preceding claims 1-3, **characterized by** a clutching device (30) adapted for
- coupling the first and/or second support conveyor unit (10a,b) and/or the transfer conveyor unit (60) with a drive unit (20) for driving the at least one drivable support conveyor (11) and/or the at least one drivable transfer conveyor (61) of the respective conveyor units (10a,b, 60) in the conveying state and
- uncoupling the first and/or second support conveyor unit (10a,b) and/or the transfer conveyor unit (60) from the drive unit (20) in the idling state.

5. Dock station arrangement (1) according to any of the preceding claims 1-4, **characterized by** a detection device (40) for detecting a presence and/or an absence of the goods to be transferred between the conveyor device (70) and the transport vehicle (3).

6. Dock station arrangement (1) according to any of the preceding claims 1-5, **characterized in that** the detection device (40) has a first and second sensor unit (41a,b) arranged at a distance (C) from each other along the conveying direction (A).

7. Dock station arrangement (1) according to any of the preceding claims 1-6, **characterized by** a control unit (50) adapted for communicating the presence and/or absence of the goods to be transferred between the conveyor device (70) and the transport vehicle (3), wherein preferably the clutching device (30) comprises the control unit (50).

8. Dock station arrangement (1) according to claim 7, **characterized in that** the control unit (50) is adapted to switch the first and/or second support conveyor unit (10a,b) and/or the transfer conveyor unit (60) into
- the conveying state if the detection device (40) detects the presence of the goods; and/or
- the idling state if the detection device (40) detects the absence of the goods.

9. Dock station arrangement (1) according to any of the preceding claims 4-8, **characterized in that** the clutching device (30)
- is signaling coupled with the detection device (40) and/or the control unit (50); and/or
- is adapted to be signaling coupled with the drive unit (20).

10. Dock station arrangement (1) according to any of the preceding claims 1-9, **characterized in that** the first and/or second support conveyor unit (1 0a,b) and/or the transfer conveyor unit (60) comprises a transmission unit (12) for coupling the at least one drivable support conveyor (11) and/or the at least one drivable transfer conveyor (61) with the clutching device (30).

11. Dock station arrangement (1) according to any of the preceding claims 1-10, **characterized by** the drive unit (20), wherein preferably the drive unit (20) is a mobile driving device, that is connected to the clutching device (30) and/or the transfer conveyor unit (60) to drive the first and/or second support conveyor unit (10a, b) and/or the transfer conveyor unit (60) in the conveying state, and wherein preferably the drive unit (20) comprises the control unit (50).

12. Dock station arrangement (1) according to any of the preceding claims 1-11, **characterized by** the transport vehicle (3), wherein preferably the transport vehicle (3) is an automated guided vehicle or an autonomous mobile robot.

13. Conveyor system (100) for conveying goods, in particular a goods carrier (2), **characterized by** a dock station arrangement (1) according to any of the preceding claims 1-12 and at least one conveyor device (70).

14. Method for transferring goods, in particular a goods carrier (2), from a transport vehicle (3) to a conveyor device (70) by means of a dock station arrangement (1), in particular a dock station arrangement (1) according to any of the preceding claims 1-12, **characterized by** the steps:
- providing (110) the dock station arrangement (1) in an idling state; and
- receiving (115) the transport vehicle (3) in a transport vehicle receiving space (S) with the goods loaded to be transferred; and
- unloading (120) the goods on a first and second support conveyor unit (10a,b) from the transport vehicle (3) received in the transport vehicle receiving space (S) of the dock station arrangement (1); and
- detecting (130) a presence and/or an absence of the goods by means of a detection device (40); and
- switching (140) the dock station arrangement (1) from the idling state into a conveying state to transfer the received goods to the conveyor device (70) if the presence of the goods is detected by means of the detection device (40); and
- transferring (150) the unloaded goods along a conveying direction (A) to the conveyor device (70); and/or
- switching (160) the dock station arrangement (1) from the conveying state into the idling state to stop driving the first and/or second support conveyor unit (10a,b) and/or the transfer conveyor unit (60) if the absence of the goods is detected.

15. Method according to the preceding claim 14, wherein the dock station arrangement (1) comprises a first and second sensor unit (41a,b), **characterized by** the steps:
- switching (170) the dock station arrangement (1) from the idling state into the conveying state to transfer the received goods to the conveyor device (70) if the presence of the goods is detected by a first and/or second sensor unit (41a,b); and/or
- switching (180) the dock station arrangement (1) from the conveying state into the idling state to stop driving the first and/or second support conveyor unit (10a,b) and/or transfer conveyor unit (60) if the absence of the goods is detected by the respective sensor unit (41a,b); and/or
- providing (190) a drive unit (20) for transferring the goods along the conveying direction (A); and/or
- wherein the drive unit (20) triggers the step of switching the docking station arrangement (1) from the idling state into a conveying state to transfer the received goods to the conveyor device (70) if the presence of the goods is detected by means of the detection device (40) and/or from the conveying state into the idling state to stop driving the first and/or second support conveyor unit (10a,b) and/or the transfer conveyor unit (60) if the absence of the goods is detected.
